# FASCICULE DE BREVET EUROPEEN

(11) **EP 2 865 294 B1**
(45) Date de publication et mention de la délivrance du brevet: **18.07.2018**
(21) Numéro de dépôt: 14190372.4
(22) Date de dépôt: 24.10.2014
(51) Int. Cl.: A47B 21/007, A47B 81/06, F16M 11/04

(54) **Dispositif de sortie verticale d écran grâce à un vérin à gaz**
Vertikale Ausgangsvorrichtung eines Bildschirms mit Hilfe einer Gasdruckfeder
Device for vertically extending a screen using a gas cylinder

(30) Priorité: 25.10.2013 FR 1360457
(43) Date de publication de la demande: 29.04.2015
(73) Titulaire: Quetzal Burosystem, 01360 Loyettes (FR)
(72) Inventeur: Darre, Olivier, 01360 Loyettes (FR)
(74) Mandataire: Verriest, Philippe

(56) Documents cités:
- EP-A1- 1 574 150
- JP-U- H01 170 141
- US-A- 3 431 040
- US-A1- 2013 257 242

## Description

L'invention se rapporte à un dispositif de sortie verticale d'écran grâce à un vérin à gaz, et plus particulièrement à un dispositif apte à s'adapter à différents modèles d'écran.

Sont connus de l'art antérieur différents dispositifs comprenant un logement permettant d'héberger un écran et des moyens permettant la sortie de cet écran en position de travail et permettant son retrait dans le logement en position escamotée. Ces dispositifs sont généralement adaptés à une configuration précise d'écran. Généralement, la force d'expulsion de l'écran de son logement est déterminée par un actionneur dont la puissance est fixe.

En cas d'évolution des technologies et des besoins, le remplacement de l'écran implique donc le remplacement de l'actionneur, ce qui peut engendrer des coûts importants.

La présente invention a pour objectif de résoudre les difficultés susmentionnées.

Á cet effet, la présente invention a pour objet un dispositif de déplacement d'un écran entre une première position dite « escamotée » et une deuxième position dite « de travail » par rapport à un châssis ou une partie de meuble tel que décrit dans les revendications adjointes. Grâce aux dispositions selon l'invention, le déplacement de l'écran entre la position escamotée et la position de travail est assuré par le vérin de manière autonome. Le vérin permet également d'amortir le déplacement de l'écran de manière autonome. Le système de réglage permet d'adapter la force du vérin au poids de l'écran à déplacer. Le dispositif de déplacement peut donc s'affranchir de tout actionneur supplémentaire. Plus particulièrement, le dispositif de déplacement permet de s'affranchir d'un vérin commandé par un actionneur dont la puissance serait réglable et qui commanderait ainsi la force du vérin. En effet, dans le présent dispositif de déplacement, cette fonction est assurée par le système de réglage. Ces dispositions permettent une simplicité d'utilisation et d'entretien du dispositif de déplacement.

Avantageusement, ledit bras mobile est mobile en rotation par rapport audit châssis. Selon une caractéristique optionnelle de l'invention, le vérin est mobile en rotation par rapport audit bras mobile et audit châssis.

Selon un aspect de l'invention, le déplacement de l'écran entre la position escamotée et la position de travail est linéaire.

Selon un aspect de l'invention, le vérin est un vérin à gaz ou ressort à gaz.

Selon un mode de réalisation du dispositif selon l'invention, ledit bras mobile est fabriqué en une seule pièce. Selon un autre mode de réalisation, ledit bras mobile peut être réalisé par un assemblage de pièces embouties puis soudées de sorte à former une coquille.

Selon l'invention, la deuxième liaison est une liaison souple agencée pour autoriser un écartement limité entre la deuxième extrémité du bras mobile et le support d'écran.

L'écartement limité peut être obtenu en bornant l'écartement par l'action d'un élément déformable élastiquement.

Ces dispositions selon l'invention permettent une diminution des frottements et contraintes du dispositif de déplacement. La capacité de levage du dispositif de déplacement est ainsi optimisée. Les bruits de fonctionnement du dispositif sont moindres. L'entretien est également facilité car il n'est plus nécessaire de lubrifier la deuxième liaison.

Selon l'invention, la deuxième liaison comprend un élément déformable relié d'une part à la deuxième extrémité du bras mobile, et d'autre part au support d'écran.

Selon un aspect de l'invention, l'élément déformable est un élément déformable souple de longueur fixe.

Selon un aspect de l'invention, l'élément déformable est réalisé en matière textile.

Avantageusement, l'élément déformable est constitué par une courroie.

Selon un aspect de l'invention, la liaison souple est une liaison élastique.

On entend par liaison élastique une liaison comportant une fonction de rappel.

Une liaison élastique permet de lisser les irrégularités de tension et d'assouplir l'utilisation du dispositif de déplacement.

Selon un aspect de l'invention, l'élément déformable est un élément déformable élastiquement.

Selon un aspect de l'invention, l'élément déformable est agencé pour exercer une fonction de rappel.

Selon un aspect de l'invention, la courroie peut par exemple être réalisée en caoutchouc armé de fils d'acier ou d'aramide.

Selon un aspect de l'invention, l'élément déformable pourrait également être constitué par un ressort ou un segment élastique.

Un tel segment élastique pourrait également être réalisé en caoutchouc armé de fils d'acier ou d'aramide.

Selon un aspect de l'invention, l'élément élastique est relié à la deuxième extrémité du bras mobile par une liaison pivot.

Selon un aspect de l'invention, l'élément élastique est relié au support d'écran par une liaison pivot.

Selon des caractéristiques optionnelles du dispositif selon l'invention :
- ledit système de réglage comporte :
   - un élément mobile, sur lequel se rapporte ledit vérin par ladite quatrième liaison, agencé pour positionner ledit vérin sur ledit bras mobile ;
   - d'un élément fixe reliant ledit élément mobile audit bras mobile ;
- ledit élément mobile comprend une vis ;
- ledit élément fixe comprend une portion destinée à être fixée audit bras mobile, et une portion comprenant un logement destiné à accueillir ledit élément mobile ;
- ledit système de réglage comprend des moyens d'indexation de la position de ladite quatrième liaison sur ledit bras mobile ;
- ladite quatrième liaison comprend une portion mâle et une portion femelle, ladite portion femelle étant constituée de paliers aptes à accueillir ladite portion mâle de ladite quatrième liaison de manière amovible ;
- un élément de liaison est disposé entre ledit quatrième moyen de liaison et ledit système de réglage ;
- avantageusement, ledit élément de liaison comporte une partie comprenant un logement destiné à accueillir ledit élément mobile ;
- selon un mode de réalisation de l'invention, ledit élément de liaison comporte une partie comprenant un logement destiné à accueillir ledit vérin ;
- ledit système de réglage comprend un système de guidage en translation de l'élément de liaison permettant de reprendre les efforts du vérin sur l'élément de liaison et de les transmettre au bras mobile ;
- ledit système de guidage comprend un élément de guidage et un logement oblong dudit bras mobile dans lequel est destiné à s'insérer ledit élément de guidage.

Ces caractéristiques permettent une grande facilité de mise en oeuvre du dispositif. Un opérateur peut aisément adapter le dispositif aux configurations d'une grande variété d'écran. En effet, le dispositif permet à l'opérateur de ne pas limiter ses choix aux écrans dont le poids est compatible avec la force de levage du vérin. La présente invention assure une grande adaptabilité du dispositif aux évolutions technologiques.

D'autres caractéristiques et avantages de la présente invention apparaîtront à la lumière de la description qui va suivre et à l'examen des figures ci-annexées, dans lesquelles :
- la figure 1a représente un dispositif selon l'invention dans lequel l'écran est en position escamotée ;
- la figure 1b représente un dispositif selon l'invention dans lequel l'écran est en position de travail ;
- la figure 2 représente une coupe en vue arrière d'un dispositif ne correspondant pas à l'invention lorsque l'écran est en position escamotée;
- la figure 3 représente une coupe en vue arrière d'un dispositif ne correspondant pas à l'invention, lorsque l'écran est en position de travail ;
- les figures 4a et 4b représentent un bras mobile équipé d'un système de réglage selon un premier mode de réalisation ne correspondant pas à l'invention et ;
- les figures 5a et 5b représentent un deuxième mode de réalisation ne correspondant pas à l'invention, dans laquelle le dispositif de réglage comprend un système de guidage en translation de l'élément de liaison ;
- la figure 6 représente un bras mobile équipé d'un système de réglage selon un troisième mode de réalisation ne correspondant pas à l'invention ;
- la figure 7 représente un bras mobile selon un mode de réalisation du dispositif de déplacement selon l'invention dans lequel la deuxième liaison est souple ;
- les figures 8a et 8b représentent le dispositif de déplacement en position de travail et en position escamotée respectivement, selon le mode de réalisation de l'invention.

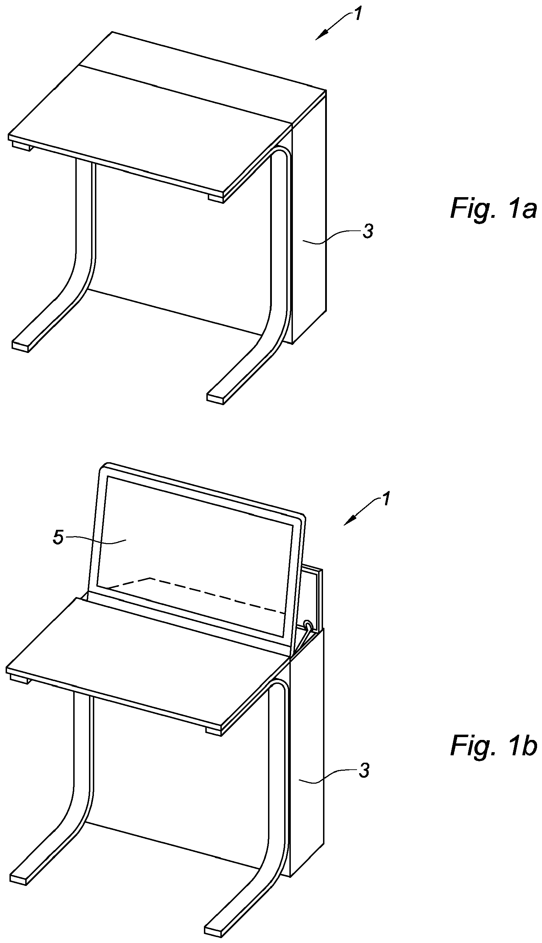

Les figures 1a et 1b représentent un poste de travail équipé du dispositif selon l'invention. En figure 1a est représenté un poste de travail 1 dans lequel l'écran est en position escamotée dans un logement du châssis 3. En figure 1b, le même poste de travail 1 est représenté dans lequel l'écran 5 est sorti de son logement du châssis 3.

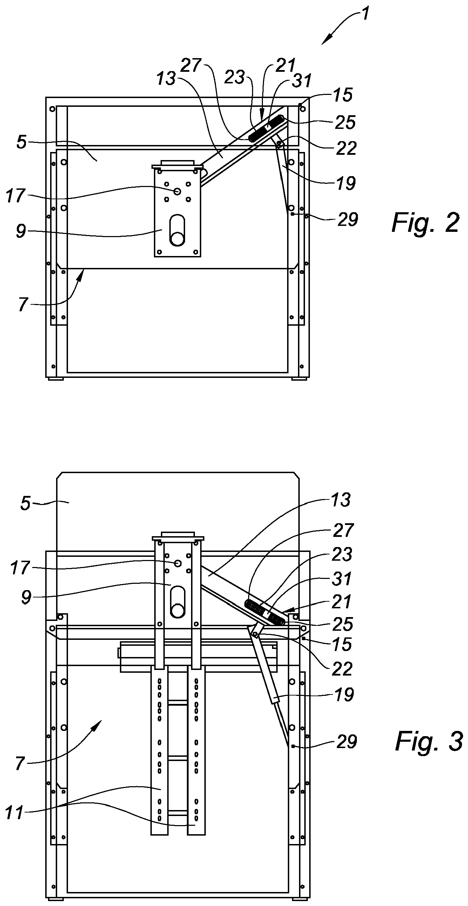

En figure 2, l'écran 5 est en position escamotée dans son logement 7. En figure 3, l'écran 5 est sorti de son logement 7, en position de travail. L'écran 5 est fixé à un support 9 et rapporté sur des moyens de guidage, dans cet exemple, une glissière 11. Un bras mobile 13 est relié, en une première extrémité, au châssis 3 par une liaison 15 rigide. Le bras mobile 13 est également relié, en une seconde extrémité, au support d'écran 9 par une liaison 17 rigide. Un vérin 19, est relié au bras mobile 13 par l'intermédiaire d'un système de réglage 21. Le vérin 19 est relié au système de réglage 21 par la liaison 22. Ce système de réglage comprend un élément mobile 23 permettant au vérin 19 de se positionner le long du bras mobile 13 entre une première position de réglage 25 et une deuxième position de réglage 27. Le vérin peut se positionner dans la plage de positionnement définie par la première position de réglage 25 et la deuxième position de réglage 27. Il peut, dans ce mode de réalisation, adopter une infinité de positions. Le vérin 19 est en outre relié au châssis 3 par une liaison 29 rigide.

Le système de réglage 21 permet de faciliter l'insertion ou le retrait de l'écran 5 de son compartiment 7. En effet, la position du vérin 19 le long du bras mobile 13 détermine la position du point d'application 31 de sa force de levage. La distance entre le point d'application 31 de la force de levage du vérin 19 et la liaison 17 implique un moment 33 au niveau de la liaison 17. Ce moment 33 est opposé au moment 35 engendré par le poids de l'écran 5. Il est donc possible pour un opérateur de faciliter le retrait ou l'insertion de l'écran 5 dans son logement 7 en faisant varier la position du point d'application 31 de l'action du vérin 19 et ainsi en compensant l'action du poids de l'écran 5 par l'action du vérin 19 sur le bras mobile 13. Cette caractéristique permet au dispositif de s'adapter à une multitude d'écrans sans que le remplacement du vérin 19 soit nécessaire.

Les liaisons 15, 17, 22, 29 peuvent être choisies entre la liaison rotule, la liaison pivot et une combinaison d'une liaison pivot et d'une liaison glissière. Ces moyens de liaison comprennent une portion femelle et une portion mâle. La liaison 17 est avantageusement une combinaison d'une liaison pivot et d'une liaison glissière.

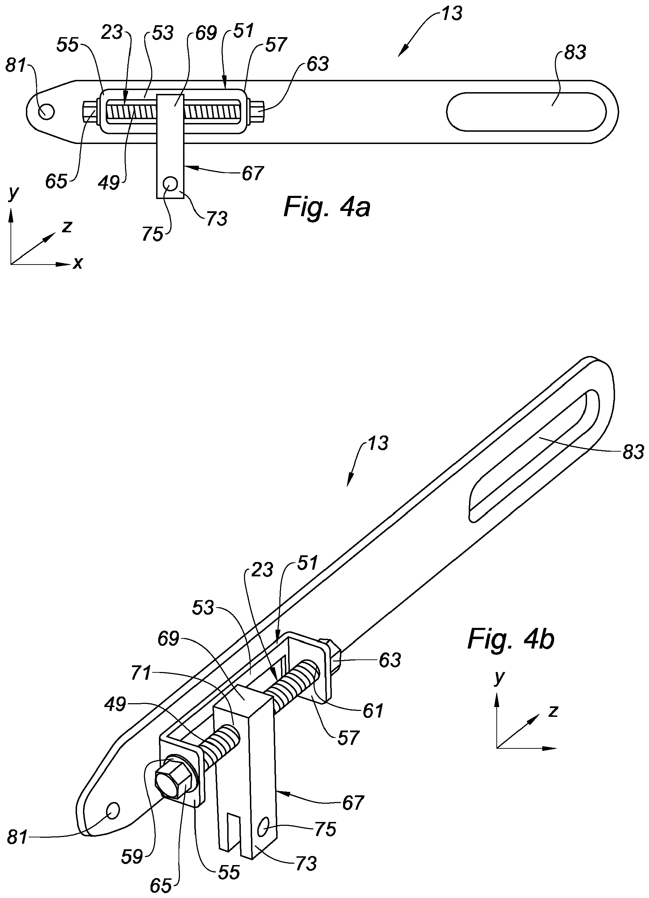

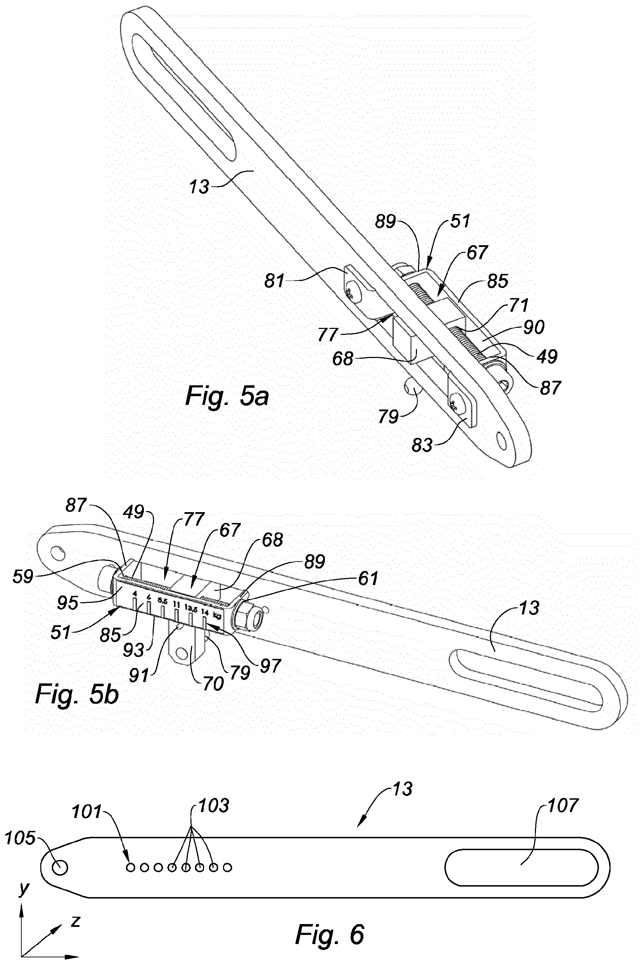

Les figures 4a, 4b et 5 représentent le bras mobile 13 et le système de réglage 21.

Dans un premier mode de réalisation ne correspondant pas à l'invention, représenté en figures 4a et 4b, le système de réglage 21 comprend un élément mobile 23, ici comprenant une vis 49. La vis 49 est reliée au bras mobile 13 par l'intermédiaire d'un élément fixe 51. Cet élément fixe comprend une portion 53 destinée à être fixée au bras mobile 13 et deux portions 55, 57 comprenant des logements 59, 61 destinés à accueillir l'élément mobile 23, ici la vis 49, fixée par des écrous 63, 65. Dans un tel mode de réalisation, le système de réglage 21 comporte un élément de liaison 67 permettant de relier le vérin 19 à la vis 49. Une première portion 69 de l'élément de liaison 67 comprend un logement 71 se rapportant sur la vis 49 et permettant un déplacement du point d'application 31 de la force de levage du vérin 19 sensiblement parallèle à la direction générale du bras mobile 13. Cette liaison rigide constituée par le logement 71 et la vis 49 est une liaison hélicoïdale. Une seconde portion 73 de l'élément de liaison 67 comprend un logement 75 destiné à accueillir le vérin 19 par une liaison 22 rigide, ici, une liaison pivot, dont le logement 75 constitue la partie femelle.

Un deuxième mode de réalisation ne correspondant pas à l'invention, est représentée en figure 5a et 5b. Les caractéristiques décrites précédemment, compatibles avec le deuxième mode de réalisation, s'appliquent également à ce deuxième mode de réalisation. Le système de réglage 21 comprend un système de guidage 66 de l'élément de liaison 67. Le système de guidage 66 permet le guidage en translation de l'élément de liaison 67. Le système de guidage 66 comprend un élément de guidage, ici un doigt 68, solidaire de l'élément de liaison 67. L'axe longitudinal du doigt 68 est perpendiculaire à l'axe longitudinal de la portion principale 70 de l'élément de liaison 67. Le logement 71, accueillant la vis 49, est central par rapport au doigt 68 et à la portion principale 70 de l'élément de liaison 67. Le système de guidage comprend également un logement oblong 77 dans le bras mobile 13. Le doigt 68 est apte à s'insérer dans le logement oblong 77. Le doigt 68 de l'élément de liaison 67 a une géométrie parallélépipédique afin d'assurer un contact linéique avec le logement oblong 77 du bras mobile 13. Le doigt 68 permet d'une part d'éviter à la partie principale 70 de l'élément de liaison de pivoter lors de son réglage ou lors de l'actionnement du vérin 19. D'autre part le doigt 68 permet la reprise des efforts par le bras mobile 13. En effet, lors de l'actionnement du vérin 19, des efforts importants sont transmis à l'élément de liaison 67. Le doigt 68 permet ainsi de réduire son usure et sa vitesse de déformation. Le contact entre les surfaces du doigt 68 et du logement oblong 77 est plan ce qui optimise la transmission des efforts au bras mobile 13.

Dans ce mode de réalisation, la quatrième liaison 22 est une liaison rotule donc la partie mâle est constituée par l'embout 79 rapporté sur l'élément de liaison 67.

L'élément fixe 51 comprend deux portions de fixation 81 et 83 permettant de le relier au bras mobile 13. L'élément fixe 51 comprend également une portion de guidage 85, sensiblement parallèle à la direction principale du bras mobile 13. Cette portion de guidage 85 est reliée aux portions de fixation 81 et 83 par l'intermédiaire des portions intermédiaires 87 et 89. Les portions intermédiaires 87 et 89 comprennent les logements 59 et 61 permettant d'accueillir la vis 49. La vis 49 est située entre le bras mobile 13 et la portion de guidage 85 de l'élément fixe 51. La face 90 de la portion de guidage 85 de l'élément fixe 51 est adjacente l'élément de liaison 67. Ainsi, la portion de guidage 85 de l'élément fixe 51 permet également le guidage en translation de l'élément de liaison 67. Un indicateur 91 est rapporté sur l'élément de liaison 67. Il est adjacent au bord inférieur 93 de la portion de guidage 85 de l'élément de liaison 67. D'un point de vu transversal, il est au centre de l'élément de liaison 67. L'élément de liaison 67 comprend, sur sa face 95 opposée à sa face 90, une graduation 97 correspondant au poids de l'écran 5. Ainsi le positionnement de l'élément de liaison 67 le long de la vis 49 est facilité.

Un troisième mode de réalisation ne correspondant pas à l'invention est représenté en figure 6. Les caractéristiques décrites précédemment, compatibles avec le troisième mode de réalisation, s'appliquent également à ce troisième mode de réalisation. Le système de réglage 21 comprend des moyens d'indexation 101 de la position de la liaison 22 sur le bras mobile 13. Ces moyens d'indexation 101 se présentent sous la forme de paliers, constitués ici par logements 103 répartis le long du bras mobile 13, formant la partie femelle de la liaison 22. Ces logements 103 sont aptes à accueillir la portion mâle de la liaison 22.

Les figures 4a, 4b et 5 représentent également un logement 105 constituant la partie femelle de la liaison 15 en une extrémité du bras mobile 13. En une deuxième extrémité, le bras mobile 13 présente une lumière oblongue 107 constituant la partie femelle du moyen de liaison 17, autorisant ainsi la sortie verticale de l'écran 5 de son compartiment 7. Selon ce mode de réalisation, la liaison 17 est composée d'une liaison pivot selon l'axe z et d'une liaison glissière selon l'axe x.

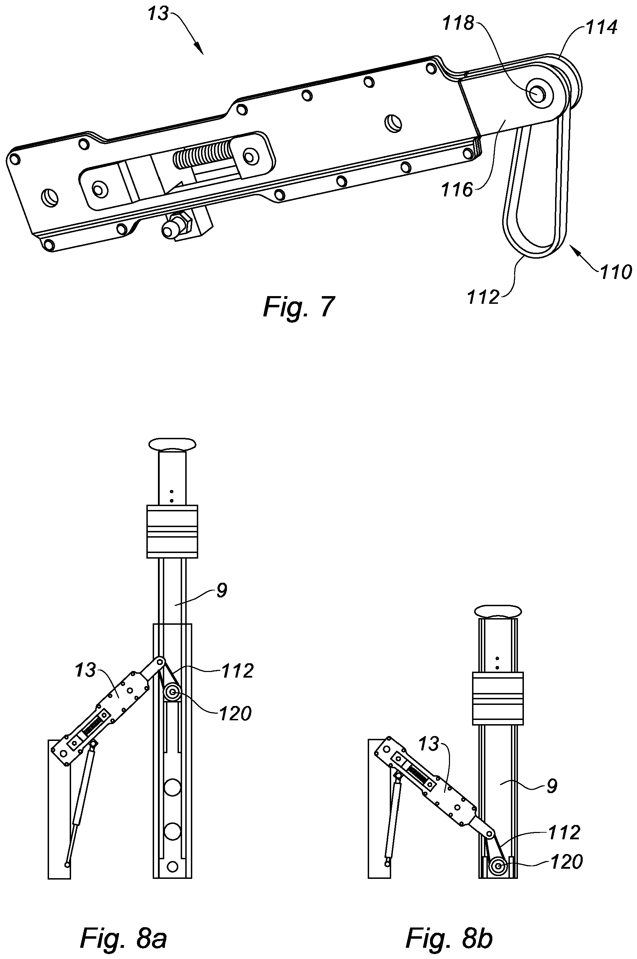

Selon un mode de réalisation de l'invention représenté en figures 7, 8a, 8b, la deuxième liaison est une liaison souple. Les caractéristiques des modes de réalisation précédents, qui ne sont pas liées à la deuxième liaison s'appliquent également à ce mode de réalisation. La liaison souple agencée pour autoriser un écartement limité entre la deuxième extrémité du bras mobile 13 et le support d'écran 9.

L'écartement limité peut être obtenu en bornant l'écartement soit par l'action d'un élément déformable souple, soit par l'action d'un élément déformable élastiquement.

Dans ce mode de réalisation, la liaison souple est assurée par un élément déformable 110 comprenant ici une courroie 112. La courroie 112 présente ici une faible élasticité, ce qui permet l'amortissement des mouvements de l'écran. La courroie est ici réalisée en caoutchouc armé de fils d'acier ou d'aramide.

La courroie 112 est reliée à la deuxième extrémité du bras mobile 13. La deuxième extrémité du bras mobile 13 comprend, dans ce mode de réalisation, deux portions d'extrémité 114, 116, symétriques selon un plan longitudinal du bras mobile 13. Ces portions d'extrémité 114, 116 comprennent chacune une lumière dans lesquelles un arbre 118 est fixé. La courroie 112 est disposée autour de l'arbre 118.

La courroie 112 est reliée en outre au support d'écran 9 par une liaison pivot. Le support d'écran 9 comprend un arbre au bout duquel est fixé un écrou 120, formant ainsi une gorge de réception de la courroie 112.Bien entendu, la présente invention ne se limite pas aux modes de réalisation décrits et représentés, fournis à titre d'exemples illustratifs et non limitatifs.

## Revendications

1. Dispositif de déplacement d'un écran (5) entre une première position dite « escamotée » et une deuxième position dite « de travail » par rapport à un châssis (3) ou une partie de meuble comprenant :
- un support d'écran (9) sur lequel ledit écran (5) est destiné à être rapporté ;
- un guide (11) du mouvement dudit écran (5) rapporté sur ledit support d'écran (9) relativement audit châssis (3), apte à guider ledit écran (5) entre ladite position escamotée dans un logement (7) dudit châssis (3) et ladite position de travail ;
- un bras mobile (13) relié d'une part, en une première extrémité, audit châssis (3) par une première liaison (15) rigide ; et d'autre part, en une deuxième extrémité, audit support d'écran (9) par une deuxième liaison (17), la deuxième liaison (17) étant une liaison souple agencée pour autoriser un écartement limité entre la deuxième extrémité du bras mobile (13) et le support d'écran (9), la deuxième liaison (17) comprenant un élément déformable (110) relié d'une part à la deuxième extrémité du bras mobile (13), et d'autre part au support d'écran (9), l'élément déformable (110) étant soit un élément souple de longueur fixe, soit un élément déformable élastiquement ;
- un vérin (19) relié d'une part audit châssis (3) par une troisième liaison (29) rigide ; et d'autre part audit bras mobile (13) par une quatrième liaison (22) rigide ;
- un système de réglage (21) du positionnement de ladite quatrième liaison (22) entre une première position de réglage (25) et une deuxième position de réglage (27) le long dudit bras mobile (13), de manière à adapter le moment induit sur ladite deuxième liaison (17) par l'action dudit vérin (19) au moment induit par le poids dudit écran (5) sur ladite deuxième liaison (17).

2. Dispositif selon l'une des revendications précédentes dans lequel ledit système de réglage (21) comporte :
- un élément mobile (23), sur lequel se rapporte ledit vérin (19) par ladite quatrième liaison (22), agencé pour positionner ledit vérin (19) sur ledit bras mobile (13) ;
- d'un élément fixe (51) reliant ledit élément mobile (23) audit bras mobile (13).

3. Dispositif selon la revendication 2 dans lequel ledit élément mobile (23) comprend une vis (49).

4. Dispositif selon l'une des revendications 2 ou 3 dans lequel ledit élément fixe (51) comprend une portion (53) destinée à être fixée audit bras mobile (13), et une portion (55, 57) comprenant un logement (59, 61) destiné à accueillir ledit élément mobile (23).

5. Dispositif selon l'une des revendications 2 à 4, dans lequel ledit système de réglage (21) comporte un élément de liaison (67) disposé entre ledit élément mobile (23) et ledit vérin (19).

6. Dispositif selon l'une des revendications 2 à 5, dans lequel ledit système de réglage (21) comprend des moyens d'indexation (77) de la position de ladite quatrième liaison (22) sur ledit bras mobile (13).

7. Dispositif selon la revendication 6, dans lequel ladite quatrième liaison (22) comprend une portion mâle et une portion femelle, ladite portion femelle étant constituée de paliers (79) aptes à accueillir ladite portion mâle de la quatrième liaison (22) de manière amovible.

8. Dispositif selon l'une des revendications précédentes dans lequel ledit système de réglage (21) comprend un système de guidage (66) en translation de l'élément de liaison (67).

9. Dispositif selon la revendication 8 dans lequel ledit système de guidage (66) comprend un élément de guidage (68) et un logement oblong (77) dudit bras mobile (13) dans lequel est destiné à s'insérer ledit élément de guidage (68).

## Patentansprüche

1. Vorrichtung zum Verlagern eines Bildschirms (5) zwischen einer ersten Position, "eingefahrene" Position genannt, und einer zweiten Position, "Arbeitsposition" genannt, in Bezug auf ein Chassis (3) oder einen Möbelteil, die Folgendes umfasst:
- einen Bildschirmträger (9), auf den der Bildschirm (5) angebaut werden soll;
- eine Führung (11) der Bewegung des Bildschirms (5), der auf dem Bildschirmträger (9) angebaut ist, in Bezug auf das Chassis (3), die geeignet ist, um den Bildschirm (5) zwischen der in einer Aufnahme (7) des Chassis (3) eingefahrenen Position und der Arbeitsposition zu führen;
- einen beweglichen Arm (13) der einerseits an einem ersten Ende mit dem Chassis (3) durch eine erste starre Verbindung (15) verbunden ist, und andererseits an einem zweiten Ende mit dem Bildschirmträger (9) durch eine zweite Verbindung (17), wobei die zweite Verbindung (17) eine biegsame Verbindung ist, die eingerichtet ist, um eine begrenzte Beabstandung zwischen dem zweiten Ende des beweglichen Arms (13) und dem Bildschirmträger (9) zu gestatten, wobei die zweite Verbindung (17) ein verformbares Element (110) umfasst, das einerseits mit dem zweiten Ende des beweglichen Arms (13) und andererseits mit dem Bildschirmträger (9) verbunden ist, wobei das verformbare Element (110) entweder ein biegsames Element mit fixer Länge oder ein elastisch verformbares Element ist;
- einen Zylinder (19), der einerseits mit dem Chassis (3) durch eine dritte starre Verbindung (29) verbunden ist, und andererseits mit dem beweglichen Arm (13) durch eine vierte starre Verbindung (22);
- ein Einstellsystem (21) der Positionierung der vierten Verbindung (22) zwischen einer ersten Einstellposition (25) und einer zweiten Einstellposition (27) entlang des beweglichen Arms (13), so dass das Moment, das auf der zweiten Verbindung (17) durch die Aktion des Zylinders (19) induziert wird, an das Moment angepasst wird, das von dem Gewicht des Bildschirms (5) auf der zweiten Verbindung (17) induziert wird.

2. Vorrichtung nach einem der vorhergehenden Ansprüche, wobei das Einstellsystem (21) Folgendes umfasst:
- ein bewegliches Element (23), auf das der Zylinder (19) von der vierten Verbindung (22) angebaut wird, das eingerichtet ist, um den Zylinder (19) auf dem beweglichen Arm (13) zu positionieren;
- ein stationäres Element (51), das das bewegliche Element (23) mit dem beweglichen Arm (13) verbindet.

3. Vorrichtung nach Anspruch 2, wobei das bewegliche Element (23) eine Schraube (49) umfasst.

4. Vorrichtung nach einem der Ansprüche 2 oder 3, wobei das stationäre Element (51) einen Abschnitt (53) umfasst, der dazu bestimmt ist, an dem beweglichen Arm (13) befestigt zu sein, und einen Abschnitt (55, 57), der eine Aufnahme (59, 61) umfasst, die dazu bestimmt ist, das bewegliche Element (23) aufzunehmen.

5. Vorrichtung nach einem der Ansprüche 2 bis 4, wobei das Einstellsystem (21) ein Verbindungselement 67) umfasst, das zwischen dem beweglichen Element (23) und dem Zylinder (19) angeordnet ist.

6. Vorrichtung nach einem der Ansprüche 2 bis 5, wobei das Einstellsystem (21) Positionierungsmittel (77) der Position der vierten Verbindung (22) auf dem beweglichen Arm (13) umfasst.

7. Vorrichtung nach Anspruch 6, wobei die vierte Verbindung (22) einen Steckabschnitt und einen Buchsenabschnitt umfasst, wobei der Buchsenabschnitt aus Lagern (79) besteht, die geeignet sind, um den Steckabschnitt der vierten Verbindung (22) abnehmbar aufzunehmen.

8. Vorrichtung nach einem der vorhergehenden Ansprüche, wobei das Einstellsystem (21) ein Führungssystem (66) in Verschiebung des Verbindungselements (67) umfasst.

9. Vorrichtung nach Anspruch 8, wobei das Führungssystem (66) ein Führungselement (68) und eine längliche Aufnahme (77) des beweglichen Arms (13) umfasst, in die sich das Führungselement (68) einfügen soll.

## Claims

1. A device for displacing a screen (5) between a first position called "retracted" position and a second position called "working" position with respect to a frame (3) or a piece of furniture comprising:
- a screen carriage (9) onto which said screen (5) is intended to be added;
- a guide (11) of the movement of said screen (5) added onto said screen carriage (9) relative to said frame (3), able to guide said screen (5) between said retracted position in a housing (7) of said frame (3) and said working position;
- a movable arm (13) linked, on the one hand, at a first end, to said frame (3) by a first rigid link (15) and, on the other hand, at a second end, to said screen carriage (9) by a second link (17), the second link (17) being a flexible link arranged to allow a limited spacing between the second end of the movable arm (13) and the screen carriage (9), the second link (17) comprising a deformable element (110) linked, on the one hand, to the second end of the movable arm (13) and, on the other hand, to the screen carriage (9), the deformable element (110) being either a flexible element of a fixed length, or an elastically deformable element;
- a cylinder (19) linked, on the one hand, to said frame (3) by a third rigid link (29) and, on the other hand, to said movable arm (13) by a fourth rigid link (22);
- a system (21) for adjusting the positioning of said fourth link (22) between a first adjustment position (25) and a second adjustment position (27) along said movable arm (13), so as to adapt the moment induced on said second link (17) by the action of said cylinder (19) at the moment induced by the weight of said screen (5) on said second link (17).

2. The device according to any of the preceding claims wherein said adjustment system (21) includes:
- a movable element (23) onto which said cylinder (19) is added by said fourth link (22), arranged to position said cylinder (19) on said movable arm (13);
- a fixed element (51) linking said movable element (23) to said movable arm (13).

3. The device according to claim 2 wherein said movable element (23) comprises a screw (49).

4. The device according to any of claims 2 or 3 wherein said fixed element (51) comprises a portion (53) intended to be fixed to said movable arm (13), and a portion (55, 57) comprising a housing (59, 61) intended to accommodate said movable element (23).

5. The device according to any of claims 2 to 4, wherein said adjustment system (21) includes a linking element (67) disposed between said movable element (23) and said cylinder (19).

6. The device according to any of claims 2 to 5, wherein said adjustment system (21) comprises means (77) for indexing the position of said fourth link (22) on said movable arm (13).

7. The device according to claim 6, wherein said fourth link (22) comprises a male portion and a female portion, said female portion being constituted of bearings (79) able to accommodate said male portion of the fourth link (22) in a removable manner.

8. The device according to any of the preceding claims wherein said adjustment system (21) comprises a system (66) for guiding in translation of the linking element (67).

9. The device according to claim 8 wherein said guide system (66) comprises a guide element (68) and an elongate housing (77) of said movable arm (13) into which said guide element (68) is intended to be inserted.
